(19) Europäisches Patentamt / European Patent Office / Office européen des brevets

(11) **EP 2 695 723 A1**

(12) **EUROPEAN PATENT APPLICATION**
published in accordance with Art. 153(4) EPC

(43) Date of publication:
**12.02.2014 Bulletin 2014/07**

(21) Application number: **12767549.4**

(22) Date of filing: **06.04.2012**

(51) Int Cl.:
*B29C 65/02* (2006.01)    *B23K 11/06* (2006.01)
*B23K 11/00* (2006.01)    *H01B 1/24* (2006.01)

(86) International application number:
**PCT/JP2012/060088**

(87) International publication number:
**WO 2012/137985 (11.10.2012 Gazette 2012/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.04.2011 JP 2011085873**

(71) Applicants:
• **Teijin Limited**
**Osaka-shi, Osaka 541-0054 (JP)**
Designated Contracting States:
**AL AT BE BG CH CY CZ DK EE ES FI FR GB GR HR HU IE IS IT LI LT LU LV MC MK MT NL NO PL PT RO RS SE SI SK SM TR**
• **Origin Electric Company, Limited**
**Tokyo 171-8555 (JP)**
Designated Contracting States:
**DE**

(72) Inventors:
• **KATO, Takumi**
**Gotemba-shi, Shizuoka 412-0048 (JP)**
• **SAITO, Kiyoshi**
**Gotemba-shi, Shizuoka 412-0048 (JP)**
• **KOMATSU, Akio**
**Tokyo 171-8555 (JP)**

(74) Representative: **Hallybone, Huw George**
**Carpmaels & Ransford LLP**
**One Southampton Row**
**London WC1B 5HA (GB)**

(54) **JOINT MANUFACTURING METHOD**

(57) A method of obtaining a high-strength bonded body between composite materials, each containing a thermoplastic resin and carbon fibers, with a low current in a short period of time, wherein the bonded body is rarely susceptible to deformation such as warp.

The method of manufacturing a bonded body, comprises the steps of:
(i) preparing a plurality of composite materials, each containing a thermoplastic resin and discontinuous carbon fibers which are randomly oriented;
(ii) overlapping the composite materials each other;
(iii) sandwiching at least a part of the overlapped portion between a pair of electrodes; and
(iv) applying electricity between the electrodes to weld together the thermoplastic resins with Joule heat.

Fig. 1

EP 2 695 723 A1

**Description**

TECHNICAL FIELD

The present invention relates to a method of manufacturing a bonded body between composite materials, each containing a thermoplastic resin as a matrix and discontinuous carbon fibers.

BACKGROUND ART

In general, to bond a composite material containing a thermoplastic resin as a matrix, fastening with a bolt-and-nut or a rivet, an adhesive and welding are employed.

As for fastening with a bolt-and-nut or a rivet, it is necessary to make a hole in a base material, thereby posing problems such as the reduction of the strength of the base material and an increase in the number of processing steps. Further, although a carbon fiber composite material is now attracting much attention as a material which brings about the effect of reducing weight due to its strength and lightweight, if the number of positions to be fastened with a bolt-and-nut or a rivet is increased, a merit obtained by using the carbon fiber composite material may be impaired by weight growth due to an increase in the number of fastener parts.

As for conjugation with an adhesive, high conjugation strength is not obtained, and therefore not suitable for a structural body.

As for welding, there are welding techniques making use of a hot plate, vibration and ultrasonic waves. Since a raw material is integrated as it is, there is no weight growth caused by bonding and high strength is obtained. Therefore, it can be said that these techniques are very advantageous for thermoplastic resins. However, welding making use of a hot plate has a problem that a resin adheres to the hot plate due to stringing. As for vibration welding, a special jig is required for each type of workpiece and the bonding surface must be vibrated, therefore making it impossible to handle a complex shape. Ultrasonic welding has limitation to the size of a horn, cannot handle a large-sized workpiece and has a problem such as the generation of a high-frequency sound.

There is also known a method in which electricity is applied to a resin containing a conductive material to generate heat from the conductive material so as to melt the resin and weld it. Patent Document 1 discloses a method of bonding a plastic molded product, comprising the steps of:

bringing two plastic molded products of a conductive thermoplastic resin into contact with each other; and
applying electricity between them to pressure bond them together while exothermally melting them.

However, the current used for the exothermic melting of the above method is extremely large, i.e., 500 to 1,200 A (page 3, upper left column), thereby leaving much to be improved.

Patent Document 2 discloses a method of manufacturing a fused body by melt-solidifying two resin composites, each containing a thermoplastic resin and carbon fibers. Also, in this method, a large amount of current, i.e., 100,000 A is applied (paragraph 0030).

Non-patent Document 1 discloses a method of welding together two composites, each containing a thermoplastic resin and carbon fibers, by sandwiching them between electrodes and applying electricity to them. However, this method has a disadvantage that the composites warp because a unidirectional material of continuous fibers is used as the carbon fibers (page 264, left column).

As a method of bonding composite materials containing a thermoplastic resin as a matrix, there does not exist one in which a high-strength bonded body having no defects such as warp is obtained with a low current regardless of the size and shape of a workpiece.

(Patent Document 1)   JP-A 62-62733
(Patent Document 2)   JP-A 2009-73132

(Non-patent Document 1) Kazumasa Moriya, bonding by the resistance spot welding of a carbon fiber-reinforced thermoplastic composite material, Journal of The Japan Society for Aeronautical and Space Sciences, vol. 42, pp. 259-266, April 1994

DISCLOSURE OF THE INVENTION

It is an object of the present invention to provide a method of obtaining a high-strength bonded body between composite materials, each containing a thermoplastic resin and carbon fibers, with a low current in a short period of time, wherein the bonded body is rarely susceptible to deformation such as warp.

The inventors of the present invention conducted intensive studies to attain the above object and found that a high-strength bonded body which is rarely warped is obtained with a low current when a material in which discontinuous carbon fibers are randomly oriented in a thermoplastic resin is used as a composite material in a method of manufacturing a bonded body by overlapping a plurality of composite materials, each containing a thermoplastic resin and carbon fibers, each other, sandwiching them between electrodes and applying electricity to them so as to melt and weld together the thermoplastic resins with Joule heat. The present invention was accomplished based on this finding.

That is, the present invention is a method of manufacturing a bonded body, comprising the steps of:

    (i) preparing a plurality of composite materials, containing a thermoplastic resin and discontinuous carbon fibers which are randomly oriented;
    (ii) overlapping the composite materials each other;
    (iii) sandwiching at least a part of the overlapped portion between a pair of electrodes; and
    (iv) applying electricity between the electrodes to weld together the thermoplastic resins with Joule heat.

Also, the present invention is an apparatus for manufacturing a bonded body comprising overlapped plurality of composite materials containing a thermoplastic resin and discontinuous carbon fibers which are randomly oriented, comprising:

    (i) a first electrode in contact with the uppermost surface layer of one of the overlapped composite materials;
    (ii) a second electrode in contact with the uppermost surface layer of the other overlapped composite material;
    (iii) a power source for applying electricity between the first and second electrodes;
    (iv) a pressure mechanism connected to at least one of the first and second electrodes; and
    (v) a controller for controlling the bonding current and the energization time, wherein
at least a part of the overlapped portion of the composite materials is sandwiched between the first electrode and the second electrode and electricity is applied between the electrodes while the composite materials are pressurized so as to weld together the thermoplastic resins with Joule heat.

BRIEF DESCRIPTION OF THE DRAWINGS

    Fig. 1 shows an example of the production method of the present invention;
    Fig. 2 shows another example of the production method of the present invention;
    Fig. 3 shows still another example of the production method of the present invention;
    Fig. 4 shows a further example of the production method of the present invention;
    Fig. 5 shows a still further example of the production method of the present invention; and
    Fig. 6 is a perspective view of a bonded body produced in Example 10.

Explanations of Letters and Numerals

    4       power source
    12      electrode
    13      electrode
    W1      composite material
    W2      composite material
    22      electrode
    23      electrode
    32      pressure-aided electrode
    32a     electrode
    32b     pressure aid member
    33      pressure-aided electrode
    33a     electrode
    33b     pressure aid member
    42      pressure-aided electrode
    42a     electrode

42b    pressure aid member
43    pressure-aided electrode
43a    electrode
43b    pressure aid member
52    pressure-aided electrode
52a    electrode
52b    pressure aid member
53    pressure-aided electrode
53a    electrode
53b    pressure aid member
54    composite material
55    composite material
56    bonded portion

## BEST MODE FOR CARRYING OUT THE INVENTION

Embodiments of the present invention will be described hereinunder.

[composite material]

The composite material used in the present invention contains a thermoplastic resin as a matrix and discontinuous carbon fibers. Since the composite material contains discontinuous carbon fibers, it is possible to enable the thermoplastic resin which is generally nonconductive to exhibit electric conductivity.

Typical examples of the carbon fibers include PAN-based carbon fibers and pitch-based carbon fibers. PAN-based and pitch-based carbon fibers are selected according to use purpose. In general, when high strength is required, PAN-based carbon fibers are used.

The expression "discontinuous carbon fibers" means carbon fibers having an average fiber length of 0.1 to 300 mm out of fibers. Fibers other than "discontinuous fibers" are called "continuous fibers".

The average fiber length of the discontinuous fibers is preferably 5 to 100 mm, more preferably 8 to 80 mm, much more preferably 10 to 50 mm and particularly preferably 10 to 40 mm.

The average fiber length (La) was obtained from the lengths (Li, "i" is an integer of 1 to 100) of all the measured reinforcing fibers based on the following equation by measuring and recording the lengths of 100 reinforcing fibers randomly extracted to the unit of 1 mm with a caliper and a magnifier.

$$La\ =\ \Sigma Li/100$$

Preferably, the carbon fibers constituting the composite material in the present invention contain carbon fiber bundles constituted of a critical number or more of single fiber defined by the following equation (1) in a volume ratio of 20 % or more to less than 99 % based on the total amount of the carbon fibers.

$$Critical\ number\ of\ single\ fiber\ =\ 600/D\ \ (1)$$

(D is the average fiber diameter ($\mu$m) of carbon fibers.)

The average fiber diameter (Da) was obtained from the diameters (Di, "i" is an integer of 1 to 50) of all the measured fibers based on the following equation by taking a photo of the sections of fibers with a microscope at 1,000 or more-fold magnification, selecting the sections of 50 fibers at random and recording the diameters of circles circumscribing the sections of the fibers as fiber diameters.

$$Da\ =\ \Sigma Da/50$$

Outside the above range, when other opened carbon fiber bundles in a monofilament state or constituted of less than the critical number of single fiber exist, the moldability of the composite material is excellent advantageously. When the ratio of the carbon fiber bundles becomes less than 20 % based on the total amount of the carbon fibers, it is difficult to uniformly heat the composite material though a bonded body having excellent surface quality is obtained, thereby making it difficult to obtain a bonded body having excellent mechanical properties. When the ratio of the carbon fiber bundles becomes 99 % or more, entangled portions of the carbon fibers become thick locally, thereby making it difficult to obtain a thin composite material. Also, the random nature of the composite material tends to be impaired. The preferred range of the volume ratio of the carbon fiber bundles is 30% or more to less than 90 %.

It is desirable that the average number (N) of fibers contained in the carbon fiber bundle constituted of the critical number or more of monofilaments should satisfy the following expression (2).

$$0.7 \times 10^4/D^2 < N < 1 \times 10^5/D^2 \qquad\qquad (2)$$

(D is the average fiber diameter ($\mu$m) of carbon fibers.)

The average number of fibers is recorded by taking out all the fiber bundles from a 100 mm x 100 mm area with tweezers and measuring the number (I) of reinforcing fiber bundles (A) and the length (Li) and weight (Wi) of each of the reinforcing fiber bundles. As for fiber bundles which are too small to be taken out with tweezers, the total mass (Wk) of them is measured in the end. A scale capable of measuring to the unit of 1/100 mg (0.01 mg) is used for the measurement of mass.

The critical number of single fiber is calculated from the fiber diameter (D) of the reinforcing fiber to divide reinforcing fiber bundles into reinforcing fiber bundles (A) having a critical number or more of monofilaments and the others. When two or more different types of reinforcing fibers are used, the reinforcing fiber bundles are divided according to the type of fibers, and the reinforcing fiber bundles are measured and evaluated for each type of fibers.

The average number (N) of fibers of the reinforcing fiber bundle (A) is obtained as follows. The number (Ni) of fibers contained in each reinforcing fiber bundle is obtained from the fineness (F) of the reinforcing fibers in use based on the following equation.

$$Ni = Wi/(Li \times F)$$

The average number (N) of fibers contained in the reinforcing fiber bundle (A) is obtained from the number (I) of reinforcing fiber bundles (A) based on the following equation.

$$N = \sum Ni/I$$

The ratio (VR) of the mat of the reinforcing fiber bundle (A) to the total weight of the fibers is obtained from the bulk density ($\rho$) of the reinforcing fibers based on the following equation.

$$VR = \sum(Wi/\rho) \times 100/((Wk + \sum Wi)/\rho)$$

Stated more specifically, when the average fiber diameter of the carbon fibers is 5 to 7 $\mu$m, the critical number of monofilaments is 86 to 120. When the average fiber diameter of the carbon fibers is 5 $\mu$m, the average number of fibers contained in the fiber bundle is 280 to 4,000 and particularly preferably 600 to 2,500. When the average fiber diameter of the carbon fibers is 7 $\mu$m, the average number of fibers contained in the fiber bundle is 142 to 2,040 and particularly preferably 300 to 1,600.

When the above average number (N) of fibers contained in the carbon fiber bundle is $0.7 \times 10^4/D^2$ or less, it is difficult to obtain a high fiber volume content (Vf). When the average number (N) of fibers contained in the carbon fiber bundle is $1 \times 10^5/D^2$ or more, a thick portion is locally formed, which tends to form a void. To obtain a composite material having a thickness of 1 mm or less, if fibers which have been simply separated are used, the unevenness is large and excellent physical properties may not be obtained. When all the fibers are opened, it is easy to obtain a thin composite material but the entangling of fibers becomes marked, whereby a composite material having a high fiber volume content may not be obtained. When a carbon fiber bundle having a critical number or more of monofilaments defined by the above formula (1) and carbon fibers in a monofilament state or constituted of a smaller number of monofilaments than the critical number are made existent at the same time, a composite material which can be made thin and has a high physical property development ratio can be realized. Also, surprisingly, a composite material which can be bonded with a low current in a short period of time is provided. It is assumed that the carbon fiber bundle, the length of the carbon fiber and the ratio of the carbon fibers to the thermoplastic resin which satisfy the above conditions are connected with bonding. Particularly, the carbon fiber bundle has a high carbon fiber density and a short fiber length as the carbon fibers are discontinuous fibers. That is, it is considered that this is due to an appropriate entangled portion of carbon fibers.

The content of the carbon fibers in the composite material of the present invention is preferably 10 to 90 % as a volume content (Vf). When Vf is 10 % or more, electricity can be stably applied to the composite material. When Vf is set to 90 % or less, a resistance value is secured to obtain Joule heat. To obtain a stable bonded body from the viewpoints of energization and heat generation, Vf is more preferably 20 to 55 % and much more preferably 20 to 50 %.

As for the orientation of the carbon fibers, the carbon fibers are randomly oriented in a current flowing direction, that is, a direction (in-plane direction) parallel to a direction basically perpendicular to the energization direction. Since electricity usually runs along carbon fibers, a composite material in which the carbon fibers have no directionality in the in-plane direction, that is, are randomly oriented can be energized stably in the thickness direction.

Preferably, the carbon fibers are equally randomly oriented because they can be stably bonded when they have a constant electric resistance value. A composite material in which discontinuous fibers are randomly oriented, for example, a composite material in which carbon cut fibers are placed one upon another is preferably a composite material which is molded into a random mat characterized in that the carbon fibers are discontinuous carbon fibers having an average fiber length of 5 to 100 mm and oriented substantially two-dimensionally randomly with a fiber areal weight of 25 to 3,000 g/m$^2$.

The preferred random mat used in the present invention does not have anisotropy in physical properties such as strength, elastic modulus and conductivity in the in-plane direction of the mat basically but has isotropy in the in-plane direction. Isotropy in the in-plane direction of the carbon fibers in the random mat is also maintained in the obtained bonded body.

In the present invention, a tensile test is carried out to measure tensile elasticity moduli in an arbitrary direction and a direction orthogonal to this direction within the plane of the finally obtained bonded body so as to calculate a ratio (E$\delta$) by dividing the largest value by the smallest value. A bonded body having an E$\delta$ value of not more than 2 is considered as isotropic. A bonded body having an E$\delta$ of not more than 1.3 is considered as more isotropic.

The matrix resin in the composite material is a thermoplastic resin. The thermoplastic resin is preferably at least one selected from the group consisting of polyamide, polycarbonate, polyoxymethylene, polyphenylene sulfide, polyphenylene ether, modified polyphenylene ether, polyethylene terephthalate, polybutylene terephthalate, polyethylene naphthalate, polyethylene, polypropylene, polystyrene, polymethyl methacrylate, AS resin and ABS resin. The thermoplastic resin is not particularly limited as long as it can be molten with Joule heat and can be selected according to each purpose.

When the amount and type of the discontinuous carbon fibers are adjusted to obtain a desired electric resistance value, the thermoplastic resin can be welded regardless of its type. As for the weight ratio of the discontinuous carbon fibers contained in the overlapped portion of the composite material, the total amount of the discontinuous carbon fibers is preferably 10 to 1,000 parts by weight based on 100 parts by weight of the thermoplastic resin. It is more preferably 10 to 300 parts by weight and more preferably 10 to 150 parts by weight based on 100 parts by weight of the thermoplastic resin. However, this does not apply to discontinuous carbon fibers contained in the composite material of a portion other than the overlapped portion.

The composite material may contain fillers other than discontinuous carbon fibers and additives as long as the object of the present invention is not impaired. The additives include, but are not limited to, a flame retardant, heat stabilizer, ultraviolet absorbent, nucleating agent and plasticizer.

[method of manufacturing a bonded body]

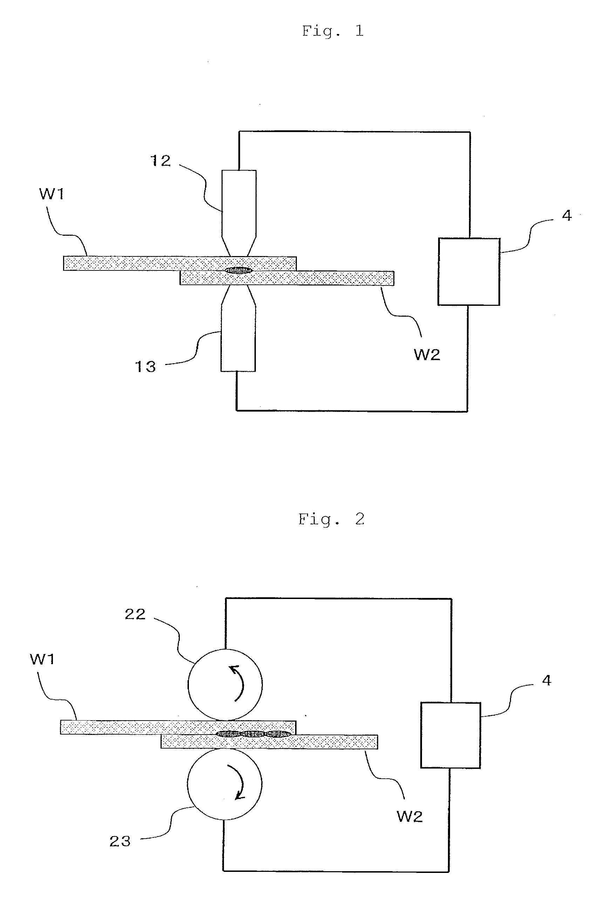

Fig. 1 is a schematic diagram of an apparatus according to a first embodiment for explaining a bonding method making use of resistance welding. Reference numerals 12 and 13 denote a pair of electrodes, 4 a power source, and W1 and W2 composite materials to be welded together. In the present invention, the composite materials W1 and W2, each containing a thermoplastic resin as a matrix and discontinues carbon fibers, are overlapped each other, a part of the overlapped portion is sandwiched between a pair of electrodes, and electricity is applied between the electrodes. Stated more specifically, two or more composite materials W1 and W2 are overlapped each other. At the same time, at least a part of the overlapped portion is sandwiched between the electrodes 12 and 13, and a current is applied between the electrodes 12 and 13. At this point, for the simplification of the process, the composite materials are preferably sandwiched between the electrodes 12 and 13 to be fixed and pressurized. The fixing of the composite materials is preferably carried out by the electrodes while pressurization.

In this bonding method, electricity may be applied while the composite materials W1 and W2 are sandwiched, and a molded article having a complex shape and any size can be obtained by multi-point bonding.

The power source 4 used for bonding may be either an AC power source or a DC power source. To obtain heat generation efficiently, a DC power source is preferred.

Although the material and diameter of the electrodes 12 and 13 in use are not limited, the material is preferably copper or a copper alloy, and the diameter is preferably about 3 to 30 mm. Although the shape of the electrodes 12 and 13 is not particularly limited, rod-like electrodes are used in this embodiment. It is preferred that predetermined welding pressure should be applied to the composite materials W1 and W2 by connecting at least one of the electrodes 12 and 13 to an unshown pressure mechanism.

Since a method for welding the matrix resin by melting it with Joule heat is adopted, it is preferred to control the amount of electricity to be applied according to the melting point of the matrix resin and the content of the discontinuous carbon fibers.

The current value to be applied for bonding is preferably about 10 to 500 A and more preferably 10 to 200 A.

The energization time is 10 seconds or less and the substantial lower limit is 0.1 second. Although it is preferred to control such that a constant current is applied for a predetermined time or such that a constant power is obtained, the present invention is not limited to these. The welding pressure is preferably 0.01 MPa or more and the substantial upper limit is 1,000 MPa or less.

The above bonding current and the energization time may be changed according to the material, size and thickness of the composite materials W1 and W2. For example, the bonding current may be 5 to 250 A and more preferably 5 to 100 A. The application of the bonding current may be carried out for 10 seconds or more and preferably 30 seconds at the longest. For example, the bonding current is 5 to 100 A and the energization time is 1 to 20 seconds.

Fig. 2 is a schematic diagram of an apparatus according to a second embodiment for explaining a bonding method making use of resistance welding. This embodiment differs from the first embodiment only in the constitution of the electrode.

The electrodes 22 and 23 in this embodiment are roller type electrodes. Since the roller type electrodes 22 and 23 are connected to a power source 4 so that a predetermined voltage is applied to the roller type electrodes 22 and 23, the composite materials W1 and W2 can be bonded together continuously by the rolling of the roller type electrodes 22 and 23. Even when the roller type electrodes 22 and 23 are used, energization is carried out intermittently like the aforementioned rod type electrodes 12 and 13. Thus, energization can be carried out while pressure is applied to the composite materials by rolling the roller type electrodes sandwiching the composite materials W1 and W2.

To apply a bonding current by using the roller type electrodes 22 and 23, a pulse bonding current may be applied while the electrodes 22 and 23 are rolled instead that a bonding current is applied continuously. In this case, the time of one pulse corresponding to one energization time is preferably 30 seconds or less and more preferably 1 to 20 seconds and the substantial lower limit is 0.1 second like the aforementioned first embodiment.

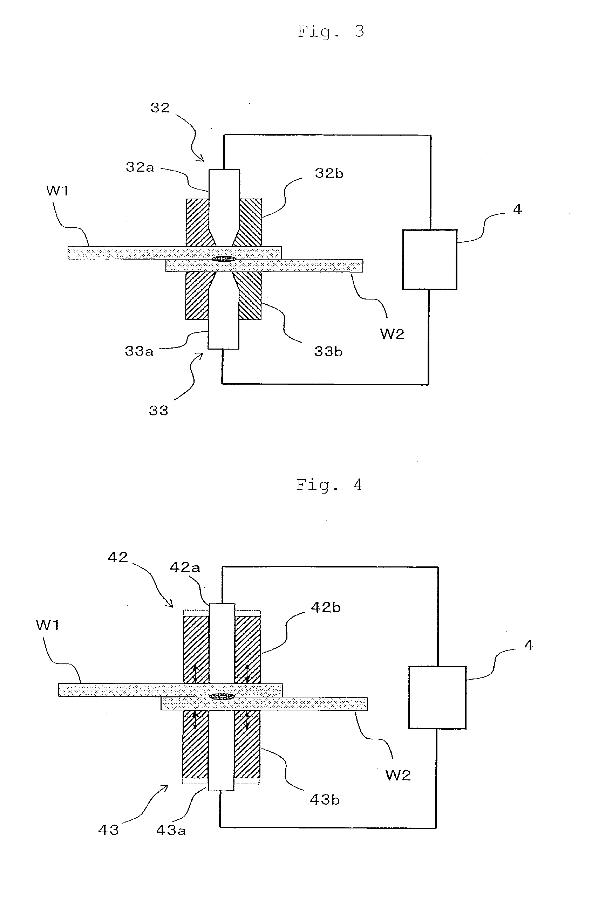

Fig. 3 is a schematic diagram of an apparatus according to a third embodiment for explaining a bonding method making use of resistance welding.

In the bonding by resistance welding of composite materials comprising a thermoplastic resin, the composite materials W1 and W2 may be warped or deformed by heat generation according to energization time. To cope with this, in the third embodiment, as shown in Fig. 3, pressure-aided electrodes 32 and 33 provided with pressure aid members 32b and 33b to a pair of electrodes 32a and 33a are used to press the composite materials W1 and W2 around the electrodes 32a and 33a from above and below as shown in Fig. 3, respectively. It is preferred that the composite materials should be sandwiched while the electrodes and areas around them are pressurized. The pressure aid members 32b and 33b are made of an electric insulator having high heat resistance, such as fluorine resin, specifically polytetrafluoroethylene (PTFE) or ceramic, and the pressure members 32b and 33b are fixed to the electrodes 32a and 33a such that the bottom surfaces, that is, contact surfaces with the composite materials W1 and W2 of the pressure aid members 32b and 33b become flush with the bottom surfaces of the electrodes 32a and 33a, respectively.

According to the third embodiment, the warp or deformation of the composite materials W1 and W2 caused by heat generation can be suppressed by pressurizing wider areas of the composite materials W1 and W2 than the energization areas of the electrodes 32a and 33a. Since the melting areas of the composite materials W1 and W2 can be increased by pressurizing wider areas of the composite materials W1 and W2 than the energization areas, bonding strength can be enhanced. If the pressure aid members 32b and 33b are not provided, when the composite materials W1 and W2 are warped or deformed, a molten resin flowing into the gap between the composite materials W1 and W2 is exposed to air so that the surface of the molten resin is oxidized, whereby welding may become difficult. Therefore, it is preferred that the fixing of the composite materials should be carried out by pressurizing the electrodes and areas around them.

The pressurization of the electrodes and areas around them may be maintained for a predetermined time not only during energization but also after energization. For example, it is preferred that, after a bonding current is cut off, the electrodes and the pressure aid members should be further kept pressed by predetermined welding pressure from above and below the composite materials W1 and W2 for 1 to 30 seconds. Since it is conceivable that the composite materials may be warped or deformed by the residual generated heat when the electrodes and the pressure aid members are removed from the composite materials right after energization, the warp or deformation of the composite materials by heat generation can be further suppressed by pressing the surfaces of the composite materials corresponding to areas around the bonded portion between the composite materials after energization.

Fig. 4 shows a modification of the third embodiment. In this modification, pressure aided electrodes 42 and 43 having pressure aid members 42b and 43b for pressing the composite materials W1 and W2 which are located around the electrodes 42a and 43a and function independently of the electrodes 42a and 43a are used, respectively. The pressure aid members 42b and 43b are connected to unshown pressure mechanisms different from those for the electrodes 42a and 43a.

According to this modification, as welding pressure for the electrodes 42a and 43a and welding pressure for areas around the electrodes 42a and 43a can be changed, even when the surfaces of the composite materials W1 and W2 are not flat or when the surfaces of the composite materials W1 and W2 are deformed in the bonding step, the electrodes 42a and 43a can be brought into contact with the composite materials W1 and W2 without fail, respectively. Before bonding between the composite materials W1 and W2 is started, the composite materials W1 and W2 are first pressed with predetermined welding pressure by the pressure aid members 42b and 43b to be fixed and then the electrodes 42a and 43a are brought into contact with the composite materials W1 and W2 with predetermined welding pressure so that bonding between them can be started. Thus, pressurization by the electrodes 42a and 43a and pressurization by the pressure aid members 42b and 43b around the electrodes can be carried out by independent pressure mechanisms.

In this modification, both of the pressure aid members 42b and 43b can apply pressure independently of the electrodes 42a and 43a. However, it can be constituted such that either one of the pressure aid members 42b and 43b, for example, only the pressure aid member 42b installed around the electrode 42a disposed on the composite material W1 can pressurize independently.

Also, when the roller type electrodes 22 and 23 are used like the aforementioned second embodiment, roller type pressure aid members are provided at both ends of the electrodes 22 and 23, thereby making it possible to bond the composite materials W1 and W2 continuously while the warp or deformation of the composite materials W1 and W2 is suppressed.

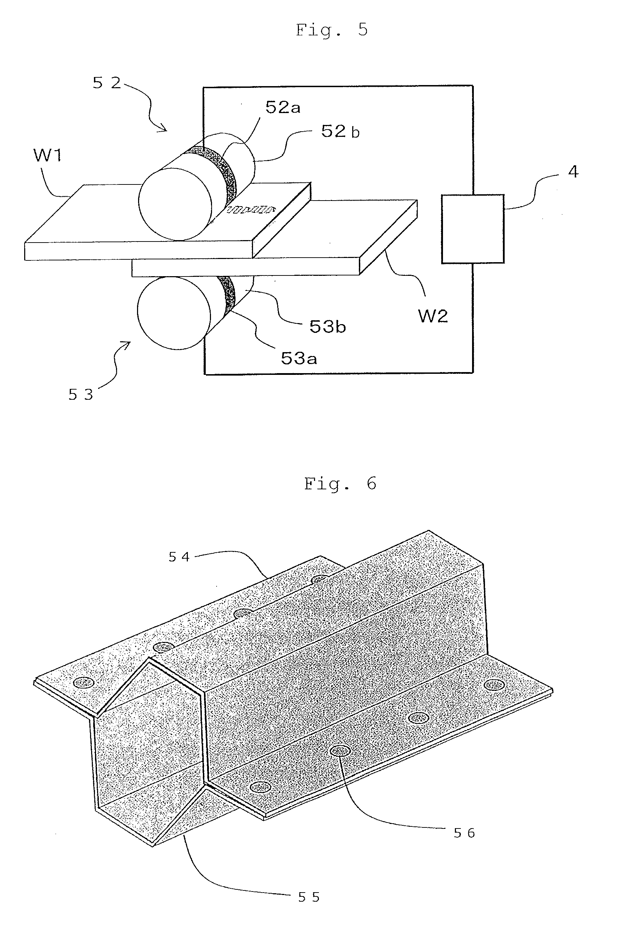

For example, as shown in Fig. 5, roller type pressure aided electrodes 52 and 53 provided with roller type pressure aid members 52b and 53b at both ends of the electrodes 52a and 53a, respectively, may be used.

[variation of composite material]

Although the thickness of the composite material to be bonded is not limited as long as the composite material can be fixed and energized, it is preferably 0.1 to 10 mm, more preferably 0.5 to 5 mm and more preferably 0.5 to 2 mm.

In the method of manufacturing a bonded body of the present invention, a piece of a composite material comprising a thermoplastic resin or a thermoplastic resin as a matrix and discontinuous carbon fibers may be sandwiched between composite materials to be welded together. The piece has a size that does not affect product shape and product size after it is bonded and its shape and size are not limited. It is, for example, a pellet having a diameter of 3 mm and a thickness of 3 mm. The thermoplastic resin constituting the piece may be the same as or different from the thermoplastic resin of the composite material. Also, the discontinuous carbon fibers contained in the piece may be the same as or different from those of the composite material.

In the method of manufacturing a bonded body of the present invention, protrusions made of a matrix or a composite material may be formed on the composite material to be welded. The protrusions have a size that does not affect product shape and product size after bonding and their shape and size are not limited. For example, they are conical protrusions having a diameter of 3 mm and a height of 3 mm.

In the method of manufacturing a bonded body of the present invention, at least one selected from the group consisting of discontinuous carbon fibers, electroconductive fibers and an electroconductive sheet is preferably sandwiched between the composite materials to be welded together. Examples of the electroconductive fibers include carbon fibers and metal fibers and the forms of the fibers include woven fabrics, knitted fabrics and unwoven cloth besides unidirectional materials of continuous fibers. Examples of the electroconductive sheet include, but are not limited to, carbon fiber composite materials, metal plates and metal foils.

[manufacturing apparatus]

The present invention is also an apparatus for manufacturing a bonded body by overlapping each other a plurality of composite materials (W1, W2), each containing a thermoplastic resin and discontinuous carbon fibers which are randomly oriented, comprising:

   (i) a first electrode (12, 22, 32a, 42a, 52a) in contact with the outermost surface layer of one of the overlapped composite materials;
   (ii) a second electrode (13, 23, 33a, 43a, 53a) in contact with the outermost surface layer of the other overlapped composite material;
   (iii) a power source (4) for applying electricity between the first electrode and the second electrode;

(iv) a pressure mechanism (unshown) connected to at least one of the first electrode and the second electrode; and
(v) a controller (unshown) for controlling the bonding current and the energization time, wherein
at least a part of the overlapped portion between the composite materials is sandwiched between the first electrode and the second electrode, and electricity is applied between the electrodes while the composite materials are pressurized so as to weld together the thermoplastic resins with Joule heat.

Preferably, the manufacturing apparatus has pressure aid mechanisms for pressurizing areas around the electrodes. Also, preferably, the pressure mechanisms for the electrodes and the pressure aid mechanisms for pressurizing areas around the electrodes function independently. Preferably, the first and second electrodes are roller type electrodes, and electricity is applied while the overlapped composite materials are sandwiched between the rollers and pressurized.

[bonding method]

The present invention is a method for bonding together composite materials by overlapping each other a plurality of composite materials, each containing a thermoplastic resin and carbon fibers, and applying electricity to at least a part of the overlapped portion to weld together the thermoplastic resins.
The present invention includes a method characterized in that composite materials, each containing a thermoplastic resin and discontinuous carbon fibers which are randomly oriented, are used as the composite materials. According to the present invention, since composite materials containing discontinuous carbon fibers which are randomly oriented are used, the bonded composite materials are hardly warped or deformed.
That is, the present invention is a method in which deformation is suppressed when composite materials, each containing a thermoplastic resin and carbon fibers, are overlapped each other and electricity is applied to at least a part of the overlapped portion to weld together the thermoplastic resins so as to bond together the composite materials, wherein composite materials, each containing a thermoplastic resin and discontinuous carbon fibers which are randomly oriented, are used as the composite materials.

EXAMPLES

The following examples are provided for the purpose of further illustrating the present invention but are in no way to be taken as limiting.

Example 1

(composite material)

Carbon fibers cut to an average fiber length of 20 mm (Tenax STS40 of Toho Tenax Co. , Ltd. , average fiber diameter of 7 $\mu$m) were randomly oriented to ensure that the average weight became 540 g/m$^2$ and the weight ratio of the carbon fibers became 52 % and Unitika Nylon 6 of Unitika Ltd. was used as a matrix to prepare a carbon fiber composite material.

(fixing, energization)

Two of the composite materials having plate dimensions of 100 mm x 25 mm x 2 mm were prepared and overlapped each other, and the overlapped portion was sandwiched between electrodes. Copper electrodes having an end diameter of 12 mm were used. The welding pressure was set to 6.6 kN (58.4 MPa). A 60 A current was applied from a DC power source for 1 second while the overlapped composite materials were pressurized. The number of bonding points was 1.

(evaluation)

When a tensile shear test was made on the obtained bonded body at a speed of 1 mm/min by using the 5587 300 kN floor type universal tester of Instron Co., Ltd., the break strength was 1.61 kN. Deformation such as warp was not observed in the obtained bonded body.

Example 2

Two composite materials of the same type as that of Example 1 were prepared, overlapped each other and sandwiched between copper electrodes having an end diameter of 5 mm. The welding pressure was set to 3.4 kN (173 MPa), and a 60 A current was applied from a DC power source for 2 seconds. The number of bonding points was 1.

(evaluation)

When a tensile shear test was made on the obtained bonded body at a speed of 1 mm/min by using the 5587 300 kN floor type universal tester of Instron Co., Ltd., the break strength was 2.77 kN. Deformation such as warp was not observed in the obtained bonded body.

Example 3

(composite material)

Carbon fibers cut to an average fiber length of 20 mm (Tenax STS40 of Toho Tenax Co., Ltd., average fiber diameter of 7 $\mu$m) were randomly oriented to ensure that the average weight became 540 g/m$^2$ and the weight ratio of the carbon fibers became 52 %, and Unitika Nylon 6 of Unitika Ltd. was used as a matrix to prepare a carbon fiber composite material.

(fixing, energization)

Two of the composite materials having plate dimensions of 100 mm x 25 mm x 1.5 mm were prepared and overlapped each other, and the overlapped portion was sandwiched between electrodes. A copper electrode having an inner diameter of 7 mm and a pressure aided electrode made of fluororesin and having an outer diameter of 16 mm were used. The welding pressure between the electrodes was set to 5. 6 kN (27.9 MPa). Electricity was applied from a DC power source while the composite materials were pressurized. The current value was raised from 5A to 50 A in first 0.5 second and then maintained at 50 A for 1.5 seconds. The number of bonding points was 1.

(evaluation)

When a tensile shear test was made on the obtained bonded body at a speed of 1 mm/min by using the 5587 300 kN floor type universal tester of Instron Co., Ltd., the break strength was 4.34 kN. Deformation such as warp was not observed in the obtained bonded body.

Comparative Example 1 (unidirectional material)

(composite material)

An acid modified polypropylene resin film (a film having a thickness of 30 $\mu$m prepared by mixing together 96 wt% of a pellet of Prime Polypro J108M of Prime Polymer Co., Ltd. and 4 wt% of a pellet of maleic anhydride modified polypropylene (Toyotac PMAH1000P of Toyobo Co., Ltd.) by means of a rotary blender and extruding the mixture by means of an extruder, the amount of an acid in the total of the resins is 0.20 wt%) was placed on both sides of a sheet prepared by aligning carbon fiber strands (Tenax STS40 of Toho Tenax Co., Ltd., average fiber diameter of 7 $\mu$m) in one direction while they were expanded to a width of 16 mm to ensure that the amount of the acid modified polypropylene resin became 52 parts by weight based on 100 parts by weight of the carbon fibers, and the resulting laminate was pressed by a roller heated at 220°C to produce a monoaxialy oriented carbon fiber reinforced composite material sheet.

(fixing, energization)

This monoaxially oriented carbon fiber reinforced composite material sheet was cut to a width of 30 cm and a length of 30 cm, and 18 pieces of the material were placed one upon another in one direction and heated at 2.0 MPa by means of a press heated at 240°C for 5 minutes to obtain a molded plate having a thickness of 2.0 mm.

Plates measuring 100 mm x 25 mm were cut out from this monoaxially oriented composite material in a fiber direction as a longitudinal direction and overlapped each other, and the overlapped portion was sandwiched between electrodes. Copper electrodes having a diameter of 5 mm were used, and the welding pressure between the electrodes was set to 2.3 kN (117 MPa). Electricity was applied from a DC power source while the plates were pressurized. The current value was raised from 10A to 50 A in 3 seconds from the start of energization and then energization was stopped.

(evaluation)

When a tensile shear test was made on the obtained bonded body at a speed of 1 mm/min by using the 5587 300 kN floor type universal tester of Instron Co., Ltd., the break  strength was 0.12 kN. The deformation of the composite materials in the obtained bonded body by pressure with the electrodes and energization was marked.

Comparative Example 2 (long fibers)

(composite materials)

A flat plate-like molded product having outer dimensions of 150 mm x 150 mm and a thickness of 1.4 mm was obtained from a long-fiber pellet (Torayca long fiber pellet of Toray Industries, Inc.) by an injection molding machine having a clamping force of 100 t. At this point, the weight ratio of the carbon fibers of the molded product was set to 25 %. For this molding, the cylinder temperature was set to 250°C near the nozzle and the mold temperature was set to 70°C.

(fixing, energization)

Plates measuring 100 mm x 25 mm were cut out from this flat plate and overlapped each other, and the overlapped portion was sandwiched between electrodes. Copper electrodes having a diameter of 5 mm were used, and the welding pressure between the electrodes was set to 3.4 kN (MPa). Electricity was applied from a DC power source while the overlapped portion was pressurized. The current value was raised from 10A to 30 A in 3 seconds from the start of energization and then energization was stopped. The number of bonding points was 1.

(evaluation)

When a tensile shear test was made on the obtained bonded body at a speed of 1 mm/min by using the 5587 300 kN floor type universal tester of Instron Co., Ltd., the break strength was 0.84 kN. The results are shown in Table 1 below.

Table 1

|  | Example 1 | Example 2 | Example 3 | Comparative Example 1 | Comparative Example 2 |
|---|---|---|---|---|---|
| Test sample | Composite material 1 | Composite material 2 | Composite material 3 | Composite material 4 | Composite material 5 |
| Plate dimensions [mm] | 100 X 25 X 2 | 100 X 25 X 2 | 100 X 25 X 1.5 | 100 X 25 X 2 | 100 X 25 X 1.4 |
| Electrode diameter [mm] | Φ 12 | Φ 5 | Φ 7 (having fluororesin on external side) | Φ 5 | Φ 5 |
| Welding pressure [kN] | 6.6 | 3.4 | 5.6 | 2.3 | 3.4 |
| Current value | 60A X 1sec | 60A X 2sec | (5A→50A) X 0.5sec +50A X 1.5sec | (10A→50A) X 3sec | (10A→30A) X 3sec |
| Break strength [kN] | 1.61 | 2.77 | 4.34 | 0.12 | 0.84 |

Example 4

Carbon fibers (Tenax STS40-24KS of Toho Tenax Co. , Ltd. (fiber diameter of 7 $\mu$m, fiber width of 10 mm)) were extended to a width of 20 mm and cut to a fiber length of 20 mm. Then, the obtained carbon fibers were introduced into a tapered tube at a feed rate of 301 g/min, air was blown over the carbon fibers in the tapered tube to extend fiber bundles partially, and the fibers were sprayed over a table placed below the outlet of the tapered tube.

Meanwhile, powder PA6 (polyamide)(1015B of Ube Industries, Ltd.) having an average particle diameter of 1 mm was prepared as a matrix resin. This was supplied into a tapered tube at a rate of 480 g/min and sprayed simultaneously with the carbon fibers to obtain a mat made of a mixture of carbon fibers having an average fiber length of 20 mm and polyamide. The critical number of single fiber of the obtained mat was 86, the volume ratio of the carbon fiber bundles based on the total amount of the mat fibers was 30 %, and the average number (N) of fibers contained in the reinforcing fiber bundle (A) was 320.

Four of the mats were laminated together and hot pressed at 300°C and 2 MPa to obtain a composite material having a thickness of 1.6 mm. Eδ was 1.1 and Vf was 29.6 vol%.

Two plates measuring 100 mm x 25 mm and having a thickness of 1.5 mm were prepared from this composite material, overlapped each other and sandwiched between copper electrodes having an end diameter of 12 mm. The number of bonding points was 1, and the welding pressure was set to 6.6 kN (58.4 MPa). A 30A current was applied from a DC power source for 1 second under pressure. Thereafter, the pressure was maintained with the electrodes for 10 seconds until cooling was completed.

(evaluation)

When a tensile shear test was made on the obtained bonded body at a speed of 1 mm/min by using the 5587 300 kN floor type universal tester of Instron Co., Ltd., the break strength was 1.58 kN. Deformation such as warp was not observed in the obtained bonded body.

Example 5

Two composite materials of the same type as in Example 4 were prepared, overlapped each other and sandwiched between copper electrodes having an end diameter of 5 mm. The number of bonding points was 1, and the welding pressure was set to 3.4 kN (173 MPa). A 30A current was applied from a DC power source for 2 seconds under pressure. Thereafter, the pressure was maintained with the electrodes for 10 seconds until cooling was completed.

(evaluation)

When a tensile shear test was made on the obtained bonded body at a speed of 1 mm/min by using the 5587 300 kN floor type universal tester of Instron Co., Ltd., the break strength was 2.71 kN. Deformation such as warp was not observed in the obtained bonded body.

Example 6

Two composite materials of the same type as in Example 4 were prepared and overlapped each other, and a copper electrode having an inner diameter of 7 mm and a pressure aided electrode made of fluroresin and having an outer diameter of 16 mm were used. The number of bonding points was 1, and the welding pressure between the electrodes was set to 5.6 kN (27.9 MPa). Electricity was applied from a DC power source under pressure. The current value was raised from 2.5A to 25 A in first 0.5 second and then maintained at 25 A for 1.5 seconds. The pressure was maintained with the electrodes for 10 seconds from the end of energization till the completion of cooling.

(evaluation)

When a tensile shear test was made on the obtained bonded body at a speed of 1 mm/min by using the 5587 300 kN floor type universal tester of Instron Co., Ltd., the break strength was 4.25 kN. Deformation such as warp was not observed in the obtained bonded body.

Example 7

Two composite materials of the same type as in Example 4 were prepared, overlapped each other and sandwiched between copper roller electrodes having a diameter of 50 mm and a width of 10 mm. The welding pressure between electrodes was set to 3.4 kN. A 30 A current was applied from a DC power source for 2 seconds under pressure, and the two composite materials were moved at a rate of 5 mm/s while they were overlapped each other. Another pair of roller pressure mechanisms were installed right after the roller electrodes to pressurize the composite materials. The welding pressure by the rollers was set to 1.1 kN.

(evaluation)

When a tensile shear test was made on the obtained bonded body at a speed of 1 mm/min by using the 5587 300 kN floor type universal tester of Instron Co., Ltd., the break strength was 1.55 kN. Deformation such as warp was not observed in the obtained bonded body.

Example 8

Carbon fibers (Tenax STS40-24KS of Toho Tenax Co. , Ltd. (fiber diameter of 7 $\mu$m, fiber width of 10 mm)) were extended to a width of about 25 mm and cut to a fiber length of 20 mm. Then, the obtained carbon fibers were introduced into a tapered tube at a feed rate of 301 g/min, air was blown over the carbon fibers in the tapered tube to extend fiber bundles partially, and the fibers were sprayed over a table placed below the outlet of the tapered tube.

Meanwhile, powder PA6 (polyamide)(1015B of Ube Industries, Ltd.) having an average particle diameter of 1 mm was prepared as a matrix resin. This was supplied into a tapered tube at a rate of 480 g/min and sprayed simultaneously with the carbon fibers to obtain a mat made of a mixture of carbon fibers having an average fiber length of 20 mm and polyamide. The critical number of single fiber of the obtained mat was 86, the volume ratio of the carbon fiber bundles based on the total amount of the mat fibers was 13 %, and the average number (N) of fibers contained in the reinforcing fiber bundle (A) was 93.

Four of the mats were laminated together and hot pressed at 300°C and 2 MPa to produce a composite material having a thickness of 1.6 mm. E$\delta$ was 1.0 and Vf was 29.6 vol%.

Two of the above composite materials were prepared, overlapped each other and sandwiched between copper electrodes having an end diameter of 12 mm. The number of bonding points was 1, and the welding pressure was set to 6. 6 kN (58.4 MPa) . A 30A current was applied from a DC power source for 1 second under pressure. Thereafter, the pressure was maintained with the electrodes for 10 seconds until cooling was completed.

(evaluation)

When a tensile shear test was made on the obtained bonded body at a speed of 1 mm/min by using the 5587 300 kN floor type universal tester of Instron Co., Ltd., the break strength was 1.47 kN. Deformation such as warp was not observed in the obtained bonded body.

Example 9

Carbon fibers (Tenax STS40-24KS of Toho Tenax Co., Ltd. (fiber diameter of 7 $\mu$m, fiber width of 10 mm)) were extended to a width of about 15 mm and cut to a fiber length of 20 mm. Then, the obtained carbon fibers were introduced into a tapered tube at a feed rate of 301 g/min, air was blown over the carbon fibers in the tapered tube to extend fiber bundles partially, and the fibers were sprayed over a table placed below the outlet of the tapered tube.

Meanwhile, powder PA6 (polyamide)(1015B of Ube Industries, Ltd.) having an average particle diameter of 1 mm was prepared as a matrix resin. This was supplied into a tapered tube at a rate of 480 g/min and sprayed simultaneously with the carbon fibers to obtain a mat made of a mixture of carbon fibers having an average fiber length of 20 mm and polyamide. The critical number of single fiber of the obtained mat was 86, the volume ratio of the carbon fiber bundles based on the total amount of the mat fibers was 96 %, and the average number (N) of fibers contained in the reinforcing fiber bundle (A) was 2,251.

Four of the mats were laminated together and hot pressed at 300°C and 2 MPa to produce a composite material having a thickness of 1.6 mm. E$\delta$ was 1.1 and Vf was 29.6 vol%.

Two of the above composite materials were prepared, overlapped each other and sandwiched between copper electrodes having an end diameter of 12 mm. The number of bonding points was 1, and the welding pressure was set to 6. 6 kN (58.4 MPa) . A 30 A current was applied from a DC power source for 1 second under pressure. Thereafter, the pressure was maintained with the electrodes for 10 seconds until cooling was completed.

(evaluation)

When a tensile shear test was made on the obtained bonded body at a speed of 1 mm/min by using the 5587 300 kN floor type universal tester of Instron Co., Ltd., the break strength was 1.39 kN. Deformation such as warp was not observed in the obtained bonded body.

Example 10

Composite materials of the same type as in Example 4 are prepared, and two hat-like shaped products shown in Fig. 6 obtained by molding the composite materials by means of a hot press are bonded together. The electrodes used at this point are a copper electrode having a diameter of 7 mm and a pressure-aided electrode made of fluororesin and having an outer diameter of 16 mm. The welding pressure is set to 5. 6 kN (27.9 MPa), and a 30 A current is applied for 3 seconds and maintained with the electrodes for 5 seconds after energization. Bonding is carried out at plural points with intervals of 50 mm.

Effect of the Invention

According to the manufacturing method of the present invention, a plurality of composite materials can be bonded together with a low current in an extremely short period of time. According to the manufacturing method of the present invention, the deformation such as warp of a bonded body rarely occurs. The tensile shear strength of the obtained bonded body is comparable with that obtained by another bonding method, and a bonded body having sufficiently high strength can be obtained. Since the manufacturing method of the present invention can be carried out by causing a robot arm to carry electrodes like ordinary metal spot welding, a workpiece having a 3-D complex shape can be handled. According to the manufacturing apparatus of the present invention, bonding between composite materials can be carried out efficiently with a low current while deformation such as warp rarely occurs.

**Claims**

1.   A method of manufacturing a bonded body, comprising the steps of:

   (i) preparing a plurality of composite materials, containing a thermoplastic resin and discontinuous carbon fibers which are randomly oriented;
   (ii) overlapping the composite materials each other;
   (iii) sandwiching at least a part of the overlapped portion between a pair of electrodes; and
   (iv) applying electricity between the electrodes to weld together the thermoplastic resins with Joule heat.

2.   The method of manufacturing a bonded body according to claim 1, wherein the discontinuous carbon fibers have an average fiber length of 5 to 100 mm.

3.   The manufacturing method according to claim 1, wherein the composite material contains 10 to 1,000 parts by weight of the discontinuous carbon fibers based on 100 parts by weight of the thermoplastic resin.

4.   The manufacturing method according to claim 1, wherein the thermoplastic resin is at least one selected from the group consisting of polyamide, polycarbonate, polyoxymethylene, polyphenylene sulfide, polyphenylene ether, modified polyphenylene ether, polyethylene terephthalate, polybutylene terephthalate, polyethylene naphthalate, polyethylene, polypropylene, polystyrene, polymethyl methacrylate, AS resin and ABS resin.

5.   The manufacturing method according to claim 1, wherein the composite materials are sandwiched between the electrodes while they are pressurized.

6.   The manufacturing method according to claim 5, wherein the composite materials are sandwiched between the electrodes while the electrodes and areas around them are pressurized.

7.   The manufacturing method according to claim 6, wherein the pressurization of the electrodes and the pressurization of areas around the electrodes are carried out by means of independent pressure mechanisms.

8.   The manufacturing method according to claim 1, wherein the composite materials are sandwiched between roller type electrodes and energized while they are pressurized.

9.   The manufacturing method according to claim 1, wherein the current is 5 to 100 A and the energization time is 1 to 20 seconds.

10.  The manufacturing method according to claim 1, wherein the composite materials are further sandwiched between the electrodes for 1 to 30 seconds after energization.

11.  An apparatus for manufacturing a bonded body comprising overlapped plurality of composite materials containing a thermoplastic resin and discontinuous carbon fibers which are randomly oriented, comprising:

   (i) a first electrode in contact with the outermost surface layer of one of the overlapped composite materials;
   (ii) a second electrode in contact with the outermost surface layer of the other composite material;
   (iii) a power source for applying electricity between the first and second electrodes;
   (iv) a pressure mechanism connected to at least one of the  first and second electrodes; and

(v) a controller for controlling the bonding current and the energization time, wherein

at least a part of the overlapped portion of the composite materials is sandwiched between the first electrode and the second electrode and electricity is applied between the electrodes while the composite materials are pressurized so as to weld together the thermoplastic resins with Joule heat.

12. The manufacturing apparatus according to claim 11 which comprises a pressure aid mechanism for pressurizing areas around the electrodes.

13. The manufacturing apparatus according to claim 12, wherein a pressure mechanism for the electrodes and a pressure aid mechanism for pressurizing areas around the electrodes function independently.

14. The manufacturing apparatus according to claim 11, wherein the first and second electrodes are roller type electrodes, and electricity is applied while the overlapped composite materials are sandwiched between the rollers and pressurized.

15. A method for bonding a plurality of composite materials containing a thermoplastic resin and carbon fibers, by overlapping them each other and applying electricity to at least a part of the overlapped portion to weld together the thermoplastic resins, wherein

the composite material contains a thermoplastic resin and discontinuous carbon fibers which are randomly oriented.

Fig. 1

Fig. 2

Fig. 3

Fig. 4

Fig. 5

W1

52

52a

52 b

53b

W2

4

53a

53

Fig. 6

54

56

55

| **INTERNATIONAL SEARCH REPORT** | | International application No. |
|---|---|---|
| | | PCT/JP2012/060088 |

**A. CLASSIFICATION OF SUBJECT MATTER**
*B29C65/02*(2006.01)i, *B23K11/06*(2006.01)i, *B23K11/00*(2006.01)n, *H01B1/24*
(2006.01)n

According to International Patent Classification (IPC) or to both national classification and IPC

**B. FIELDS SEARCHED**

Minimum documentation searched (classification system followed by classification symbols)
B29C65/00-65/82, B32B1/00-43/00, B23K11/00-11/06, H01B1/24

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 1-195023 A (Imperial Chemical Industries PLC.), 04 August 1989 (04.08.1989), entire text & GB 8728888 A & EP 321114 A2 | 1-15 |
| A | JP 2009-73132 A (Toyota Motor Corp.), 09 April 2009 (09.04.2009), entire text & US 2010/0212823 A1 & EP 2196303 A1 & WO 2009/041315 A1 & CN 101868343 A & AT 543632 T | 1-15 |

☒ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 July, 2012 (10.07.12) | 24 July, 2012 (24.07.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2012/060088 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 4-504386 A (Courtaulds PLC.),<br>06 August 1992 (06.08.1992),<br>entire text<br>& GB 8900518 A     & EP 454703 A<br>& WO 1990/008027 A1    & AU 4825890 A | 1-15 |
| A | JP 11-90986 A (Press Kogyo Co., Ltd.),<br>06 April 1999 (06.04.1999),<br>entire text<br>(Family: none) | 1-15 |
| A | JP 3-129194 A (Hitachi Metals, Ltd.),<br>03 June 1991 (03.06.1991),<br>entire text<br>(Family: none) | 1-15 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62062733 A

- JP 2009073132 A

**Non-patent literature cited in the description**

- **KAZUMASA MORIYA.** bonding by the resistance spot welding of a carbon fiber-reinforced thermoplastic composite material. *Journal of The Japan Society for Aeronautical and Space Sciences,* 1994, vol. 42, 259-266